# EUROPEAN PATENT SPECIFICATION

(11) **EP 2 715 008 B1**
(45) Date of publication and mention of the grant of the patent: **25.05.2016**
(21) Application number: 12792254.0
(22) Date of filing: 25.05.2012
(51) Int. Cl.: E04C 3/08, E04B 1/19, E04H 12/00, E04H 12/10, F03D 80/00, E02B 17/00, E02B 17/02, E02D 27/42, E04C 3/04

(54) **NODES IN A TRUSS WORK OR A TRUSS WORK LIKE STRUCTURE**
KNOTEN IN EINEM BAUWERK ODER EINER BAUWERKARTIGEN STRUKTUR
NOEUDS DANS UNE ARMATURE DE CHARPENTE OU UNE STRUCTURE DE TYPE ARMATURE DE CHARPENTE

(30) Priority: 27.05.2011 NO 20110776
(43) Date of publication of application: 09.04.2014
(73) Proprietor: Owec Tower AS, 5072 Bergen (NO)
(72) Inventor: FOSS, Gunnar, NL-2566 JE Den Haag (NL)
(74) Representative: Håmsø Patentbyrå ANS
(86) International application number: PCT/NO2012/050099
(87) International publication number: WO 2012/165970

(56) References cited:
- FR-A1- 2 503 288
- GB-A- 273 127
- JP-A- 2 102 906
- JP-A- 2011 099 313
- NL-C- 58 304

## Description

The invention relates to a node in a truss work or a truss work like structure. More particularly, the invention relates to a node comprising a planar plate to connect tubular members in a truss work.

A horizontal truss work comprises horizontal members, the bottom chord and the top chord, and vertical or diagonal members, in the following termed struts. Truss work might be planar truss work. A space truss work forms a three dimensional structure. Examples of space truss comprise horizontal truss work like crane jibs and vertical truss work like structures such as electricity pylons and jackets. In a horizontal truss work the chords carry tension and compression loads. In jackets the legs correspond to the chords and the legs carry mainly compression loads. The jacket's legs might be parallel or non-parallel. The individual struts also carry tension and compression loads.

This invention concerns planar truss work and space truss work where the struts are tubular and where the chords preferentially are tubular. In jackets and similar structures that are constructed as truss work like structures the mainly vertical legs comprises long tubular members. The advantage of a tubular member is an efficient ratio between bending stiffness and material compared to solid materials.

In a truss work the struts alternate in carrying compression loads and tension loads. Due to the rigidity of the triangles formed by the chords and the struts, the bending forces on the struts are limited.

A strut is rigidly fastened to a chord or to a leg in a node. Two struts may be joined in a node. The invention concerns especially the design of nodes in a truss work comprising tubular chords and tubular struts.

In the description and the following claims the term truss includes a planar truss work, a space truss work, a truss work with mainly horizontal chords, a truss with mainly vertical legs and other truss work like structures.

Trusses comprising metal tubular chords or legs and tubular struts are well known. The metal consists usually of steel or a steel alloy. Such trusses are known from bridges, jibs, towers and jackets. Such trusses are widely used in construction work in e.g. the petroleum industry. The tubular struts are commonly fastened to the chords or to the legs by a welding seam and form a direct tube to a tube connection. In most cases the diameter of the chord or the leg is larger than the diameter of the strut. A strong connection is obtained by shaping the strut's abutting end portion to fit the curved surface of the chord or leg, and at the same time to allow for that the longitudinal axis of the strut may not be perpendicular to the longitudinal axis of the chord or leg. In sum these conditions make the welding work complex, and it is demanding to control the finished weld seam for sufficient quality. Thus it is a time consuming task to make a truss work comprising tubular members.

Patent document NL 58304 discloses a node in a truss work comprising tubular members. The node comprises a flat plate with a curved cut out in its first end portion. The cut out encircles half the outside circumference of one first tubular member. The plate is in its second end portion provided with a perpendicular first circular plate. The end portion of the second tubular member facing the node, is cut perpendicular to its axis and provided with a second circular plate complementary to the first circular plate. The first and second circular plates form a flange like connection. There are no slits in the end portion of the second tubular member and the flat plate does not extend into the second tubular member. Patent document US 2,487,169 discloses a node in a truss work where end portions of several tubular members are joined in the node. The node comprises intersecting plates. The tubular members' end portions are cut perpendicular to the axis and the end portions are provided with slits in pairs extending axially into the tubular member at diametrical opposite sides. The plates are not connected to the outer surface of the tubular members. Patent document US 6,039,507 discloses a prefabricated bracing element for joining the legs of a cluster platform. The bracing element comprises semi-cylindrical split sleeves adapted to be wet welded onto the legs. The split sleeves comprise at least one gusset plate welded to the split plate in parallel to the centerlines of the legs. The main tubular members of the bracing are curved in the end portions for matingly engaging the split sleeves and the end portions are provided with slits in pairs extending axially into the tubular member.

Patent document JP 2011099313, showing the features of the preamble of claim 1, a truss work comprising tubular or square steel tubes. The nodes comprise gusset plates. The strut's end portions are provided with slits in pairs extending axially into the tubular or square member at diametrical opposite sides. Some disclosed gusset plates surround partly a portion of a chord at the gusset plates first end portion. The gusset plate's second end portion is cut straight perpendicular on the gusset plates longitudinal rim. Patent document JP 11062106 discloses tubular struts that are connected to tubular or squared members in a truss work. The struts end portion is flattened and a curved or V-shaped cut out may be formed in the flattened end portion. The nodes do not comprise a separate gusset plate.

The object of the invention is to remedy or to reduce at least one of the disadvantages of the prior art, or at least to provide a useful alternative to the prior art.

The object is achieved by virtue of features disclosed in the following description and in the subsequent claims.

Tubular member shall mean a tube with a circular or a polygonal cross-section. With reference to a node in a truss work a tubular member shall also mean a split sleeve with e.g. a semicircular cross-section.

The invention relates to a truss work comprising a plurality of tubular members, the tubular members comprising tubular legs and tubular struts, where legs and struts are joined in nodes; each tubular strut forms a first end portion and a second end portion, at least one end portion facing one node is provided with two slits extending axially into the strut at diametrical opposite sides; the node comprises a plane plate forming a first end portion and a second end portion, the first end portion is provided with a first curved cut out that encircles a portion of the outside surface of one tubular member and the plate is fastened to the tubular member at the first curved cut out, the second end portion is positioned in the slits and fastened to the strut, and the plane plate is at its second end portion provided with a second curved cut out positioned inside the strut's end portion in the plate's use position.

Said strut's at least one end portion may be provided with two angular cuts forming a pointed end portion. Said angular cuts may be straight cuts. Said angular cuts may be curved cuts.

Said strut's both end portions may each be provided with two angular cuts forming a pointed end portion. Said angular cuts may be straight cuts. Said angular cuts may be curved cuts.

Said one tubular member may comprise an enforcement surrounding at least a portion of said tubular member and said plate may be fastened to the enforcement at the first curved cut out. Said enforcement may be a tube encircling one tube member. Said enforcement may be semi-cylindrical in shape.

Said strut's at least one end portion may be closed by a closing plate. The closing plate may be D-shaped. Said strut's at least one end portion may be closed by a stopper between said plate and said strut.

Said tubular members and said plate may comprise a metal. Said plate may be wider at its first end portion compared to its second end portion.

In what follows, examples of preferred embodiments are described, which are visualized in the accompanying drawings, in which:
- Fig. 1: shows a perspective view of a jacket;
- Fig. 2: shows a plane view of one side of the jacket;
- Fig. 3: shows in a larger scale a perspective view of a node encircled in figure 1;
- Fig. 4: shows at the same scale as figure 3 a perspective view of a node from a different angle;
- Fig. 5: shows in a larger scale a plane view of a node encircled in figure 2;
- Fig. 6: shows a side view of the same as figure 5;
- Fig. 7: shows in a larger scale a plane view of a second node encircled in figure 2;
- Fig. 8: shows in a larger scale a perspective view of the node shown in figure 7; and
- Fig. 9: shows different embodiments of plates, each plate is part of a node.

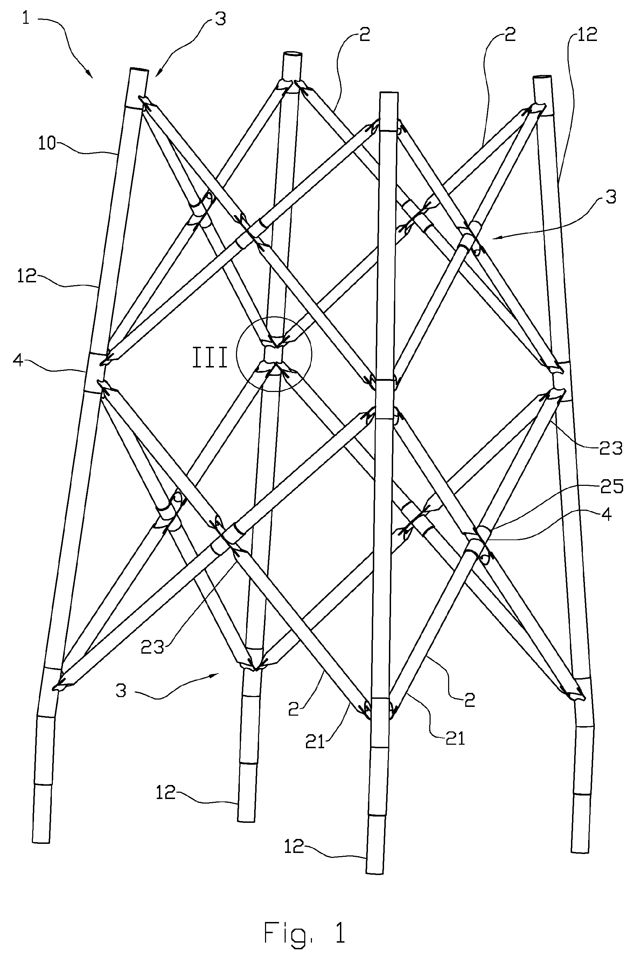

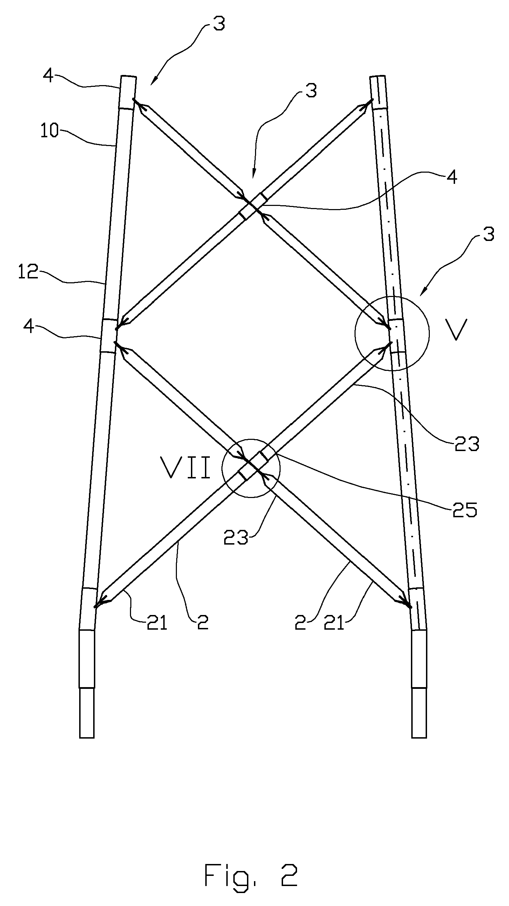

The invention provides an alternative node in a truss work. In the drawings, the reference numeral 1 denotes a truss work. The truss work 1 is exemplified by a four legged jacket 10 as shown in the drawings. The jacket 10 comprises tubular legs 12 and diagonally oriented tubular struts 2. The strut 2 forms a first end portion 21 and a second end portion 23. The struts 2 may be joined to the legs 12 in nodes 3 at the first end portion 21 and at the second end portion 23 as shown in figures 1 and 2. A first strut 2 may be joined to a second strut 2 in a node 3 positioned at a mid portion 25 of the second strut 2. The node 3 may comprise a tubular reinforcement 4 that encircles a leg 12 or a strut 2. The reinforcement 4 is not always necessary for the invention to work.

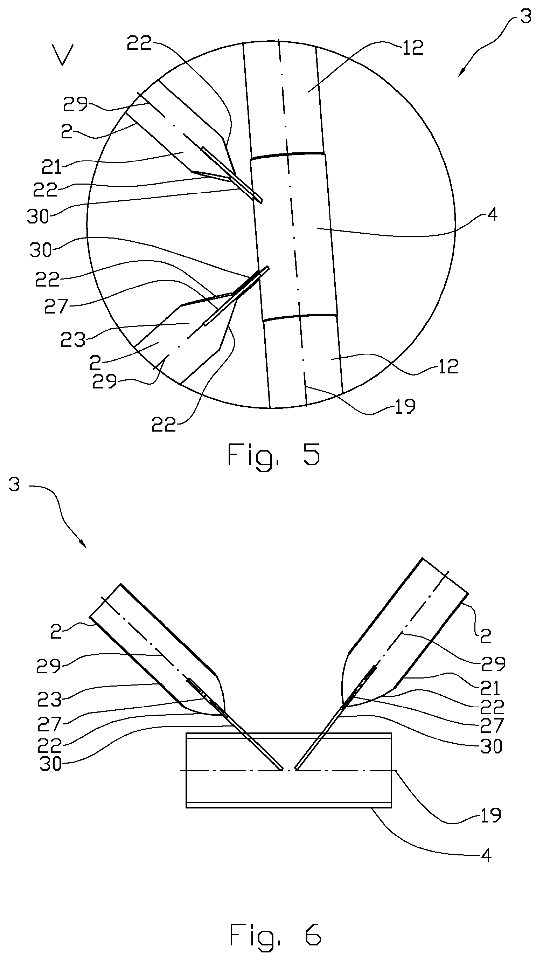

The nodes 3 are shown in greater detail in the drawings 3-8. The tubular strut 2 is in its first end portion 21 provided with two slits 27 extending axially into the strut 2 at diametrical opposite sides. The tubular strut 2 may in its second end portion 23 be further provided with two slits 27 extending axially into the strut 2 at diametrical opposite sides. A plate 30 is inserted in the slits 27 and welded to the strut 2. The strut 2 and the plate 30 have a common axis of symmetry 29, see especially figures 5-7.

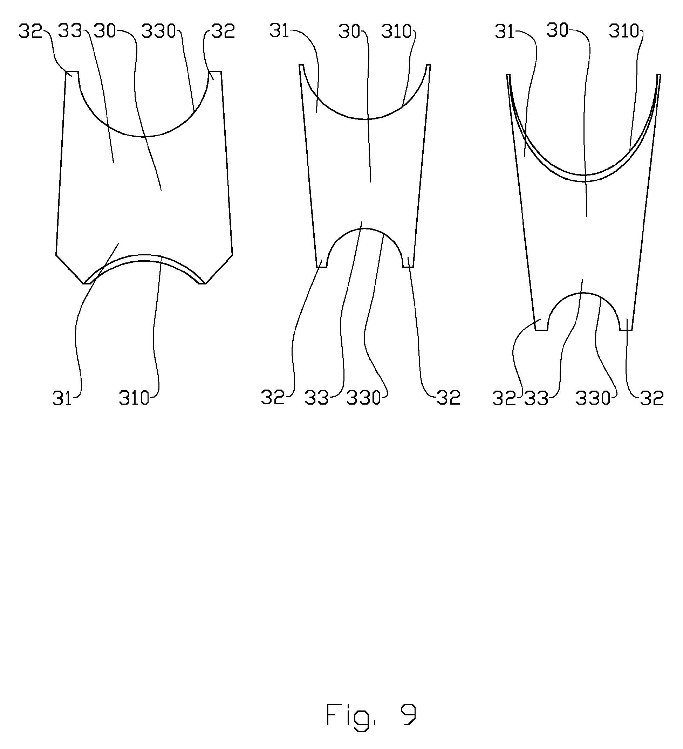

Examples of differently shaped plates 30 are shown in figure 9. The plate 30 forms a first end portion 31 and a second end portion 33. The plate 30 is wider at the first end portion 31 than at the second end portion 33. The overall shape of the plate 30 is determined by the diameter of the leg 12, the diameter of the strut 2 or the diameter of the enforcement 4, to which the plate 30 abuts and is fastened to by a weld seam, and by the diameter of the strut 2 at the end portion 21, 23 to which the plate 30 is connected to in the slits 27. The first end portion 31 is provided with a curved cut out 310 and the second end portion 33 may be provided with a cut out 330. The curvature of the cut out 310 is determined by the diameter of the leg 12, the diameter of the strut 2 or the diameter of the enforcement 4. The curved cut out 330 forms two opposite tongues 32 in the plate 30. The tongues 32 are positioned in the slits 27 when the plate 30 is in its use position. This has the advantage that the tension forces between the plate 30 and the strut 2 in the slits 27 is better distributed without hot spots along the edges of the plate 30.

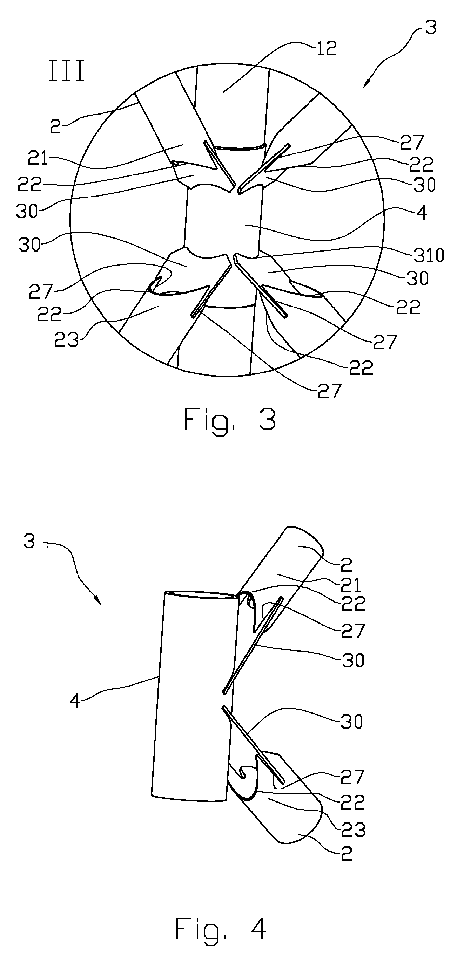

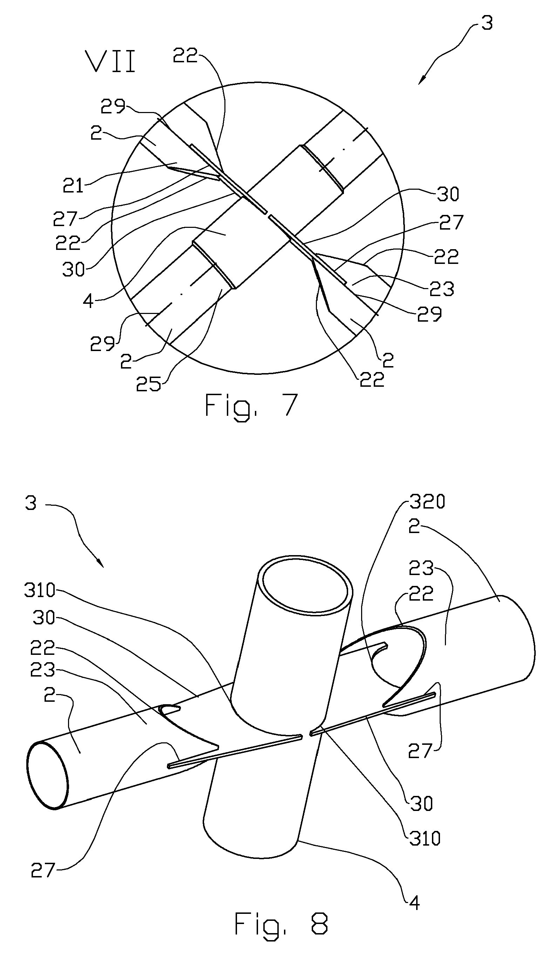

The plate 30 is fixed by a welding seam to the enforcement 4 or alternatively to the leg 12 or to the strut 2. As the plate 30 is plane, as shown in the figures, the contact portion between the plate 30 and the enforcement 4, alternatively the leg 12 or the strut 2, is following an elliptical path, see especially figures 3-5, 8. The plate 30 can be fixed by a welding seam on both planar sides to the enforcement 4, alternatively the leg 12 or the strut 2. This is advantageous compared to a tube to tube connection where the welding seam follows the outside surface of the tubes. Two plates 30 may together surround or almost surround the enforcement 4 by the cut outs 310 as shown in figure 8, or the cut out 310 may partly surround the enforcement 4 as shown in figure 3.

The struts 2 are shown with end portions 21, 23 provided with two angular cuts 22 forming pointed end portions 21, 23. The cuts 22 might be straight cuts 22. The cuts 22 might be curved cuts 22 as shown in figure 6. This has among other things the advantage that it is possible to position a weld seam between the plate 30 positioned in the slits 27 and an inner wall of the strut 2. A curved cut 22 will in addition be advantageous to reduce hot spots. In addition a welding seam may be positioned between the plate 30 planar surface and the outside surface of the strut 2.

The open end portions 21, 23 may have welded on closing plates (not shown) that are also welded to the strut 30 along the cut 22 and to the plate 30. The closing plate will distribute forces along the circumference of the strut 2 and to the plate 30. Thereby water and/or dirt cannot enter into the interior of the strut 2. The closing plate may be D-shaped. The open end portions 21, 23 may alternatively be closed by a stopper consisting of a polymeric material and shaped to fit the opening between the plate 30 and the strut 2. The polymeric material may be firm or resilient.

The strut 2 is shown with slits 27 in both end portions 21, 23. It is within the scope of the invention that only one of the end portion 21, 23 is provided with slits 27, such that that the other end portion 21, 23 is joined to a leg, to a strut 2 or to an enforcement 4 by a direct tube to tube connection.

The invention takes advantage of that the main forces in a truss work 1 is compression loads and tension loads. Flat plates 30 resist such loads very well. In addition the membrane stiffness of plates 30 ensures that the circular shape of the enforcement 4, leg 12 or strut 2 is maintained along the contact portion between the plate 30 and the surface of the enforcement 4, leg 12 or strut 2.

The nodes 3 are shown with a tubular enforcement 4. This increases the material thickness of the leg 12 or strut 2 in the node portion and thereby the strength of the node. The enforcement 4 is, however, optional and not limiting. The plate 30 may be welded directly to the surface of the leg 12 itself, or to the surface of the strut 2 itself.

Most truss works 1 are made of metal especially steel. The invention is, however, not limited to chords, legs 12 and struts 2 made of metal. The tubular chords, tubular legs 12 and tubular struts 2 may consist of a polymeric material.

## Claims

1. Truss work (1) comprising a plurality of tubular members (2, 4, 12), the tubular members (2, 4, 12) comprising tubular legs (12) and tubular struts (2), where legs (12) and struts (2) are joined in nodes (3); each tubular strut (2) forms a first end portion (21) and a second end portion (23), at least one end portion (21, 23) facing one node (3) is provided with two slits (27) extending axially into the strut (2) at diametrical opposite sides; the node (3) comprises a plane plate (30) forming a first end portion (31) and a second end portion (33), the first end portion (31) is provided with a first curved cut out (310) that encircles a portion of the outside surface of one tubular member (12, 2, 4) and the plate (30) is fastened to the tubular member (2, 4, 12) at the first curved cut out (310), the second end portion (33) is positioned in the slits (27) and fastened to the strut (2), **characterised in that** the plane plate (30) at its second end portion (33) is provided with a second curved cut out (330) positioned inside the strut's (2) end portion (21, 23) in the plate's (30) use position.

2. Truss work (1) according to claim 1, **characterised in that** said strut's (2) at least one end portion (21, 23) is provided with two angular cuts (22) forming a pointed end portion (21, 23).

3. Truss work (1) according to claim 2, **characterised in that** said angular cuts (22) are straight cuts (22).

4. Truss work (1) according to claim 2, **characterised in that** said angular cuts (22) are curved cuts (22).

5. Truss work (1) according to claim 2, **characterised in that** said strut's (2) both end portions (21, 23) each are provided with two angular cuts (22) forming a pointed end portion (21, 23).

6. Truss work (1) according to claim 5, **characterised in that** said angular cuts (22) are straight cuts (22).

7. Truss work (1) according to claim 5, **characterised in that** said angular cuts (22) are curved cuts (22).

8. Truss work (1) according to claim 1, **characterised in that** said one tubular member (2, 4, 12) comprises an enforcement (4) surrounding at least a portion of said tubular member (12, 2) and said plate (30) is fastened to the enforcement (4) at the first curved cut out (310).

9. Truss work (1) according to claim 8, **characterised in that** said enforcement (4) is a tube encircling one tube member (2, 12).

10. Truss work (1) according to claim 1, **characterised in that** said strut's (2) at least one end portion (21, 23) is closed by a closing plate between said plate (30) and said strut (2).

11. Truss work (1) according to claim 1, **characterised in that** said strut's (2) at least one end portion (21, 23) is closed by a stopper between said plate (30) and said strut (2).

12. Truss work (1) according to claim 1, **characterised in that** said tubular members (2, 4, 12) and said plate (30) comprise a metal.

13. Truss work (1) according to claim 1, **characterised in that** said plate (30) is wider at its first end portion (31) compared to its second end portion (33).

## Patentansprüche

1. Fachwerk (1) aufweisend eine Vielzahl von Rohrelementen (2, 4, 12), wobei die Rohrelemente (2, 4, 12) Rohrbeine (12) und Rohrstreben (2) aufweisen, wobei Beine (12) und Streben (2) in Knoten (3) verbunden sind; jede Rohrstrebe (2) bildet einen ersten Endabschnitt (21) und einen zweiten Endabschnitt (23), mindestens ein einem Knoten (3) zugewandter Endabschnitt (21, 23) ist mit zwei Schlitzen (27) versehen, welche sich axial an diametral gegenüberliegenden Seiten in die Strebe (2) hinein erstrecken; der Knoten (3) weist eine ebene Platte (30) auf, welche einen ersten Endabschnitt (31) und einen zweiten Endabschnitt (33) bildet, wobei der erste Endabschnitt (31) mit einem ersten kurvenförmigen Ausschnitt (310) versehen ist, welcher einen Abschnitt der Aussenfläche von einem der Rohrelemente (12, 2, 4) umschliesst und die Platte (30) am Rohrelement (2, 4, 12) an dem ersten kurvenförmigen Ausschnitt (310) befestigt ist, wobei der zweite Endabschnitt (33) in den Schlitzen (27) positioniert ist und an der Rohrstrebe (2) befestigt ist, **dadurch gekennzeichnet, dass** die ebene Platte (30) an ihrem zweiten Endabschnitt (33) mit einem zweiten kurvenförmigen Ausschnitt (330) versehen ist, welcher in der Gebrauchsstellung der Platte (30) innerhalb des Endabschnittes (21, 23) der Rohrstrebe (2) positioniert ist.

2. Fachwerk (1) gemäss Anspruch 1, **dadurch gekennzeichnet, dass** der mindestens eine Endabschnitt (21, 23) der besagten Rohrstrebe (2) mit zwei Winkelschnitten (22) versehen ist, welche einen spitzen Endabschnitt (21, 23) bilden.

3. Fachwerk (1) gemäss Anspruch 2, **dadurch gekennzeichnet, dass** die besagten Winkelschnitte (22) gerade Schnitte (22) sind.

4. Fachwerk (1) gemäss Anspruch 2, **dadurch gekennzeichnet, dass** die besagten Winkelschnitte (22) kurvenförmige Schnitte (22) sind.

5. Fachwerk (1) gemäss Anspruch 2, **dadurch gekennzeichnet, dass** beide Endabschnitte (21, 23) der besagten Rohrstrebe (2) jeweils mit zwei Winkelschnitten (22) versehen sind, welche einen spitzen Endabschnitt (21, 23) bilden.

6. Fachwerk (1) gemäss Anspruch 5, **dadurch gekennzeichnet, dass** die besagten Winkelschnitte (22) gerade Schnitte (22) sind.

7. Fachwerk (1) gemäss Anspruch 5, **dadurch gekennzeichnet, dass** die besagten Winkelschnitte (22) kurvenförmige Schnitte (22) sind.

8. Fachwerk (1) gemäss Anspruch 1, **dadurch gekennzeichnet, dass** das besagte eine Rohrelement (2, 4, 12) eine Durchsetzung (4) aufweist, welche zumindest einen Abschnitt des besagten Rohrelementes (12, 2) umgibt, und besagte Platte (30) am ersten kurvenförmigen Ausschnitt (310) an der Durchsetzung (4) befestigt ist.

9. Fachwerk (1) gemäss Anspruch 8, **dadurch gekennzeichnet, dass** die besagte Durchsetzung (4) ein Rohr ist, welches ein Rohrelement (2, 12) umschliesst.

10. Fachwerk (1) gemäss Anspruch 1, **dadurch gekennzeichnet, dass** der mindestens eine Endabschnitt (21, 23) der besagten Rohrstrebe (2) durch eine Verschlussplatte zwischen besagter Platte (30) und besagter Rohrstrebe (2) verschlossen ist.

11. Fachwerk (1) gemäss Anspruch 1, **dadurch gekennzeichnet, dass** der mindestens eine Endabschnitt (21, 23) der besagten Rohrstrebe (2) durch einen Verschluss zwischen besagter Platte (30) und besagter Rohrstrebe (2) verschlossen ist.

12. Fachwerk (1) gemäss Anspruch 1, **dadurch gekennzeichnet, dass** die besagten Rohrelemente (2, 4, 12) und die besagte Platte (30) ein Metall aufweisen.

13. Fachwerk (1) gemäss Anspruch 1, **dadurch gekennzeichnet, dass** die besagte Platte (30) an ihrem ersten Endabschnitt (31) im Vergleich zu ihrem zweiten Endabschnitt (33) weiter ist.

## Revendications

1. Une armature de charpente (1) comprenant une pluralité d'éléments tubulaires (2, 4, 12), les éléments tubulaires (2, 4, 12) comprenant des jambes tubulaires (12) et des entretoises tubulaires (2), où les jambes (12) et les entretoises (2) sont reliées à des noeuds (3); chaque entretoise tubulaire (2) forme une première portion d'extrémité (21) et une deuxième portion d'extrémité (23), au moins une portion d'extrémité (21, 23) faisant face à un noeud (3) est pourvue de deux fentes (27) s'étendant axialement dans l'entretoise (2) sur des côtés diamétralement opposés; le noeud (3) comprend une plaque plane (30) formant une première portion d'extrémité (31) et une deuxième portion d'extrémité (33), la première portion d'extrémité (31) est pourvue d'une première découpe incurvée (310) qui encercle une portion de la surface extérieure d'un élément tubulaire (12, 2, 4) et la plaque (30) est fixée à l'élément tubulaire (2, 4, 12) à la première découpe incurvée (310), la deuxième portion d'extrémité (33) est positionnée dans les fentes (27) et fixée sur l'entretoise (2), **caractérisée en ce que** la plaque plane (30) à sa deuxième portion d'extrémité (33) est pourvue d'une deuxième découpe incurvée (330) positionnée à l'intérieur des portions d'extrémité (21, 23) de l'entretoise (2), dans la position d'utilisation de la plaque (30).

2. L'armature de charpente (1) selon la revendication 1, **caractérisée en ce que** l'au moins une portion d'extrémité (21, 23) de ladite entretoise (2) est pourvue de deux coupes angulaires (22) formant une portion d'extrémité pointue (21, 23).

3. L'armature de charpente (1) selon la revendication 2, **caractérisée en ce que** lesdites coupes angulaires (22) sont des coupes droites (22).

4. L'armature de charpente (1) selon la revendication 2, **caractérisée en ce que** lesdites coupes angulaires (22) sont des coupes incurvées (22).

5. L'armature de charpente (1) selon la revendication 2, **caractérisée en ce que** lesdites deux portions d'extrémité (21, 23) de l'entretoise (2) sont chacune pourvues de deux coupes angulaires (22) formant une portion d'extrémité pointue (21, 23).

6. L'armature de charpente (1) selon la revendication 5, **caractérisée en ce que** lesdites coupes angulaires (22) sont des coupes droites (22).

7. L'armature de charpente (1) selon la revendication 5, **caractérisée en ce que** lesdites coupes angulaires (22) sont des coupes incurvées (22).

8. L'armature de charpente (1) selon la revendication 1, **caractérisée en ce que** ledit un élément tubulaire (2, 4, 12) comprend une application (4) entourant au moins une portion dudit élément tubulaire (12, 2) et ladite plaque (30) est fixée à l'application (4) au niveau de la première découpe incurvée (310).

9. L'armature de charpente (1) selon la revendication 8, **caractérisée en ce que** ladite application (4) est un tube entourant un élément tubulaire (2, 12).

10. L'armature de charpente (1) selon la revendication 1, **caractérisée en ce que** l'au moins une portion d'extrémité (21, 23) de l'entretoise (2) est fermée d'une plaque de fermeture entre ladite plaque (30) et ladite entretoise (2).

11. L'armature de charpente (1) selon la revendication 1, **caractérisée en ce que** l'au moins une portion d'extrémité (21, 23) est fermée d'un bouchon entre ladite plaque (30) et ladite entretoise (2).

12. L'armature de charpente (1) selon la revendication 1, **caractérisée en ce que** ledit élément tubulaire (2, 4, 12) et ladite plaque (30) comprend un métal.

13. L'armature de charpente (1) selon la revendication 1, **caractérisée en ce que** ladite plaque (30) est plus large à sa première portion d'extrémité (31) en comparaison à la deuxième portion d'extrémité (33).
